# EUROPÄISCHE PATENTSCHRIFT

(11) **EP 1 007 193 B1**
(45) Veröffentlichungstag und Bekanntmachung des Hinweises auf die Patenterteilung: **08.02.2006**
(21) Anmeldenummer: 99923393.5
(22) Anmeldetag: 20.03.1999
(51) Int. Cl.: B01D 71/02

(54) **HYDROPHOBER, STOFFDURCHLÄSSIGER VERBUNDWERKSTOFF, VERFAHREN ZU DESSEN HERSTELLUNG UND DESSEN VERWENDUNG**
HYDROPHOBIC PERMEABLE COMPOSITE, METHOD FOR PRODUCING SAID COMPOSITE AND USE OF THE SAME
MATERIAU COMPOSITE HYDROPHOBE PERMEABLE A DES SUBSTANCES, PROCEDE PERMETTANT DE LE PRODUIRE ET SON UTILISATION

(30) Priorität: 03.06.1998 DE 19824666
(43) Veröffentlichungstag der Anmeldung: 14.06.2000
(73) Patentinhaber: Degussa AG, 40474 Düsseldorf (DE)
(72) Erfinder: HYING, Christian, D-46414 Rhede (DE); HÖRPEL, Gerhard, D-48301 Nottuln (DE); PENTH, Bernd, D-66822 Lebach (DE)
(86) Internationale Anmeldenummer: PCT/DE1999/000876
(87) Internationale Veröffentlichungsnummer: WO 1999/062624

(56) Entgegenhaltungen:
- WO-A-96/00198
- GB-A- 2 014 868
- US-A- 5 238 569
- PATENT ABSTRACTS OF JAPAN vol. 011, no. 030 (C-400), 29. Januar 1987 (1987-01-29) & JP 61 200809 A (HITACHI LTD), 5. September 1986 (1986-09-05)
- PATENT ABSTRACTS OF JAPAN vol. 016, no. 228 (C-0944), 27. Mai 1992 (1992-05-27) & JP 04 045829 A (SHIN ETSU POLYMER CO LTD), 14. Februar 1992 (1992-02-14)

## Beschreibung

Die Erfindung betrifft einen stoffdurchlässigen Verbundwerkstoff, welcher hydrophobe Eigenschaften aufweist, ein Verfahren zur Herstellung dieses stoffdurchlässiaen Verbundwerkstoffes und seine Verwendung.

Hydrophobe stoffdurchlässige Materialien sind seit langem bekannt. Vor allem Membranen aus Teflon (Gore-Tex®), aber auch aus anderen organischen Polymeren sind hierbei zu nennen. Diese eignen sich für ein großes Anwendungsgebiet, bei dem es darauf ankommt, daß der Stoffdurchgang durch den porösen Werkstoff nur in Form von Gas oder Dampf nicht aber als Flüssigkeit stattfindet. Hergestellt werden diese Materialien beispielsweise durch Verstrecken von Teflon-Folien, wobei kleinste Risse entstehen, die dann für den Dampf- bzw. Gasdurchgang verantwortlich sind. Durch das hydrophobe Material werden Wassertröpfchen zurückgehalten, da sie aufgrund der großen Oberflächenspannung und der fehlenden Benetzbarkeit der Oberflächen der hydrophoben Materialien nicht in die Poren eindringen können.

Solche hydrophoben Materialien eignen sich für die Gas- und Dampfpermeation aber auch für die Membrandestillation. Zudem werden sie in vielen Bereichen als inerte Filtermaterialien eingesetzt.

Ein Nachteil dieser Materialien ist aber stets der eingeschränkte Temperaturbereich in dem sie verwendet werden können. Anorganische Filtermaterialien dagegen sind sehr viel temperaturstabiler, aber häufig auch hydrophiler.

Durch eine nachträgliche Hydrophobierung von verschiedensten anorganischen Substraten mit Hilfe von Reaktivkomponenten wie Silanen oder Alkyl- oder Fluoralkylverbindungen oder durch Abscheidung von Vorprodukten aus der Gasphase (CVD) sind sehr viele Stoffe hydrophobierbar, allerdings ist die Hydrophobierung nur in einem nachfolgenden Verfahrensschritt möglich. Dieser gestaltet sich teilweise recht aufwendig, so daß eine Hydrophobierung während des eigentlichen Herstellungsprozesses der anorganischen Filtermaterialien vorteilhaft wäre. Zudem ist es nicht bzw. nur mit erheblichem Aufwand möglich, mittels CVD-Technik große Flächen zu hydrophobieren.

Eine nachträgliche Hydrophobisierung auf den Oberflächen auf und innerhalb einer porösen Keramikmembran sind z.B. aus der GB - 2 014 868 - A (Metalloxid imprägniert mit Silanen) und der US - 5238569 - A (Keramikmembran imprägniert mit Polyphosphazenen) bekannt.

Aufgabe der vorliegenden Erfindung war es deshalb, einen stoffdurchlässigen Verbundwerkstoff zur Verfügung zu stellen, welcher hydrophobe Eigenschaften aufweist und der sehr viel kleinere Poren und eine sehr viel höhere Temperaturstabilität als die bekannten Materialien aufweist. Zudem sollte ein einfaches Verfahren zur Herstellung eines solchen Verbundwerkstoffes zur Verfügung gestellt werden.

Überraschender Weise wurde gefunden, dass ein stoffdurchlässiger Verbundwerkstoff auf Basis zumindest eines durchbrochenen und stoffdurchlässigen Trägers, der auf zumindest einer Seite des Trägers und im Inneren des Trägers zumindest eine anorganische Komponente aufweist, die im wesentlichen zumindest eine Verbindung aus einem Metall, einem Halbmetall oder einem Mischmetall mit zumindest einem Element der 3. bis 7. Hauptgruppe aufweist, durch die Sol-Gel Methode auf einfache Weise hydrophobierbar ist und ein solcher Verbundwerkstoff eine hohe Temperaturstabilität aufweist.

Gegenstand der vorliegenden Erfindung ist deshalb ein stoffdurchlässiger, hydrophobe Eigenschaften aufweisender Verbundwerkstoff auf Basis zumindest eines durchbrochenen und stoffdurchlässigen Trägers, der auf zumindest einer Seite des Trägers und im Inneren des Trägers eine anorganische Komponente aufweist, die im wesentlichen eine Verbindung aus einem Metall, einem Halbmetall und/oder einem Mischmetall mit zumindest einem Element der 3. bis 7. Hauptgruppe aufweist, dadurch hergestellt, dass in und auf dem durchbrochenen Träger eine Suspension, die die anorganische Komponente und ein Metalloxidsol, ein Halbmetalloxidsol oder eine Mischung dieser Sole aufweist, gebracht und durch zumindest einmaliges Erwärmen auf und im Trägermaterial verfestigt wird, dadurch gekennzeichnet, dass zumindest ein hydrophobes Material und/oder ein Hydrophobisierungsmittel dem Sol und/oder der Suspension zu gegeben wird und dass die inneren und äußeren Oberflächen des Verbundwerkstoffes, der Porengrößen von 1 nm bis 0,5 µm aufweist, hydrophobe Schichten tragen.

Ebenfalls Gegenstand der vorliegenden Erfindung ist ein Verfahren zur Herstellung eines stoffdurchlässigen, hydrophobe Eigenschaften aufweisenden Verbundwerkstoffes auf Basis zumindest eines durchbrochenen und stoffdurchlässigen Trägers, der auf zumindest einer Seite des Trägers und im Inneren des Trägers eine anorganische Komponente aufweist, die im wesentlichen eine Verbindung aus einem Metall, einem Halbmetall und/oder einem Mischmetall mit zumindest einem Element der 3. bis 7. Hauptgruppe aufweist, bei welchem auf zumindest einen durchbrochenen und stoffdurchlässigen Träger zumindest eine Suspension gebracht wird, die zumindest eine anorganische Komponente aus zumindest einer Verbindung zumindest eines Metalls, eines Halbmetalls oder eines Mischmetalls mit zumindest einem der Elemente der 3. bis 7. Hauptgruppe und ein Sol aufweist, dem als zumindest ein hydrophobes Material oder Hydrophobisierungsmittel Wachse und/oder Polymere, die unterhalb 500 °C schmelzen und/oder fließfähig werden, zugegeben werden, und diese Suspension durch zumindest einmaliges Erwärmen auf und im Trägermaterial verfestigt wird, wobei bei der Verfestigung der Wachse und/oder Polymere bei einer Temperatur unterhalb 500 °C aufgeschmolzen werden.

Ebenfalls Gegenstand der vorliegenden Erfindung ist ein Verfahren zur Herstellung eines stoffdurchlässigen, hydrophobe Eigenschaften aufweisenden Verbundwerkstoffes auf Basis zumindest eines durchbrochenen und stoffdurchlässigen Trägers, der auf zumindest einer Seite des Trägers und im Inneren des Trägers eine anorganische Komponente aufweist, die im wesentlichen eine Verbindung aus einem Metall, einem Halbmetall und/oder einem Mischmetall mit zumindest einem Element der 3. bis 7. Hauptgruppe aufweist, bei welchem auf zumindest einen durchbrochenen und stoffdurchlässigen Träger zumindest eine Suspension gebracht wird, die zumindest eine anorganische Komponente aus zumindest einer Verbindung zumindest eines Metalls, eines Halbmetalls oder eines Mischmetalls mit zumindest einem der Elemente der 3. bis 7. Hauptgruppe und ein Sol aufweist, dem zumindest ein hydrophobes Material oder hydrophobierendes Material Alkyl-, Aryl-, oder Fluoralkylsilane zugegeben werden, und diese Suspension durch zumindest einmaliges Erwärmen auf und im Trägermaterial verfestigt wird.

Außerdem ist Gegenstand der vorliegenden Erfindung die Verwendung eines Verbundwerkstoffes gemäß zumindest einem der Ansprüche 1 bis 8 als Membran bei Membrandestillationen.

Der erfindungsgemäße Verbundwerkstoff hat den Vorteil, dass er auch bei höheren Temperaturen als die bisher bekannten Materialien eingesetzt werden kann. Dadurch eröffnen sich viele Anwendungsmöglichkeiten, bei welchen der erfindungsgemäße Verbundwerkstoff eingesetzt werden kann.

Das erfindungsgemäße Verfahren hat außerdem den Vorteil, das hydrophobe Verbundwerkstoffe hergestellt werden können, ohne dass zusätzliche, kosten-, zeit- und/oder energieintensive Verfahrensschritte durchgeführt werden müssen.

Der erfindungsgemäße Verbundwerkstoff wird im folgenden beispielhaft beschrieben, ohne dass der erfindungsgemäße Verbundwerkstoff auf diese Ausführungsart beschränkt ist.

Der erfindungsgemäße stoffdurchlässige Verbundwerkstoff, der hydrophobe Eigenschaften aufweist, weist als Basis zumindest einen durchbrochenen und stoffdurchlässigen Träger auf. Auf zumindest einer Seite des Trägers und im Inneren des Trägers weist der Träger zumindest eine anorganische Komponente auf, die im wesentlichen zumindest eine Verbindung aus zumindest einem Metall, zumindest einem Halbmetall oder zumindest einem Mischmetall mit zumindest einem Element der 3. bis 7 Hauptgruppe aufweist. Unter dem Inneren eines Trägers werden in der vorliegenden Erfindung Hohlräume oder Poren in einem Träger verstanden.

Die inneren und die äußeren Oberflächen des erfindungsgemäßen Verbundwerkstoffes tragen hydrophobe Schichten. Diese Schichten können zumindest Alkyl-, Fluoralkyl-, und/oder ArylGruppen aufweisen. Die inneren und/oder äußeren Oberflächen des Verbundwerkstoffs können aber auch Wachs und/oder Polymerschichten tragen. Die Polymerschichten können hydrophobe Materialien, ausgewählt aus Polyethylen, Polyvinylchlorid, Polystyrol, Polytetrafluorethylen, Polyvinylidenfluorid, Polyvinylidenchlorid, Polyisopren, Polybutadien, thermisch behandeltem Polyimid, thermisch behandeltem Polyetherimid, Polysulfon, Polyethersulfon, Polyacrylat, Polyimidazol oder ein Gemisch dieser Polymere aufweisen. Die in den hydrophoben Schichten vorhandenen in einer Ausführungsform verwendeten Wachse und/oder Polymere weisen einen Schmelz- und/oder Erweichungspunkt unterhalb von 500 °C auf.

Der erfindungsgemäße Verbundwerkstoff, der hydrophobe Eigenschaften aufweist, weist vorzugsweise einen Anteil an hydrophobem Material von 0,0001 Gew.-% bis 40,0 Gew.-%, besonders bevorzugt von 0,01 bis 20 Gew.-% auf.

Je nach Herstellung des erfindungsgemäßen Verbundwerkstoffes mit hydrophoben Eigenschaften kann es vorkommen, dass sich das hydrophobe Material chemisch und physikalisch oder chemisch oder physikalisch von dem bei der Herstellung des Verbundwerkstoffes eingesetzten Material unterscheidet.

Erfindungsgemäß kann der durchbrochene und stoffdurchlässige Träger Zwischenräume mit einer Größe von 1 nm bis 500 µm aufweisen. Die Zwischenräume können Poren, Maschen, Löcher, Kristallgitterzwischenräume oder Hohlräume sein. Der Träger kann zumindest ein Material, ausgewählt aus Kohlenstoff, Metallen, Legierungen, Glas, Keramiken, Mineralien, Kunststoffen, amorphen Substanzen, Naturprodukten, Verbundstoffen oder aus zumindest einer Kombination dieser Materialien, aufweisen. Die Träger, welche die vorgenannten Materialien aufweisen können, können durch eine chemische, thermische oder einer mechanischen Behandlungsmethode oder einer Kombination der Behandlungsmethoden modifiziert worden sein. Vorzugsweise weist der Verbundwerkstoff einen Träger, der zumindest ein Metall, eine Naturfaser oder einen Kunststoff aufweist auf, der nach zumindest einer mechanischen Verformungstechnik bzw. Behandlungsmethode, wie z.B. Ziehen, Stauchen, Walken, Walzen, Recken oder Schmieden modifiziert wurde. Ganz besonders bevorzugt weist der Verbundwerkstoff zumindest einen Träger, der zumindest verwobene, verklebte, verfilzte oder keramisch gebundene Fasern, oder zumindest gesinterte oder verklebte Formkörper, Kugeln oder Partikel aufweist, auf. In einer weiteren bevorzugten Ausführung kann ein perforierter Träger verwendet werden. Stoffdurchlässige Träger können auch solche sein, die durch Laserbehandlung oder Ionenstrahlbehandlung stoffdurchlässig werden oder gemacht worden sind.

Es kann vorteilhaft sein, wenn der Träger Fasern aus zumindest einem Material, ausgewählt aus Kohlenstoff, Metallen, Legierungen, Keramiken, Glas, Mineralien, Kunststoffen, amorphen Substanzen, Verbundstoffen und Naturprodukten oder Fasern aus zumindest einer Kombination dieser Materialien, wie z.B. Asbest, Glasfasern, Kohlefasern, Metalldrähte, Stahldrähte, Steinwollfasern, Polyamidfasern, Kokosfasern, beschichtete Fasern, aufweist. Vorzugsweise werden Träger verwendet, die verwobene Fasern aus Metall oder Legierungen aufweist. Als Fasern aus Metall können auch Drähte dienen. Ganz besonders bevorzugt weist der Verbundwerkstoff einen Träger auf, der zumindest ein Gewebe aus Stahl oder Edelstahl, wie z.B. aus Stahldrähten, Stahlfasern, Edelstahldrähten oder Edelstahlfasern durch Weben hergestellte Gewebe, aufweist, welches vorzugsweise Maschenweite von 5 bis 500 µm, besonders bevorzugt Maschenweiten von 50 bis 500 um und ganz besonders bevorzugt Maschenweiten von 70 bis 120 µm, aufweist.

Der Träger des Verbundwerkstoffes kann aber auch zumindest ein Streckmetall mit einer Porengröße von 5 bis 500 µm aufweisen. Erfindungsgemäß kann der Träger aber auch zumindest ein körniges, gesintertes Metall, ein gesintertes Glas oder ein Metallvlies mit einer Porenweite von 0,1 µm bis 500 µm, vorzugsweise von 3 bis 60 µm, aufweisen.

Der erfindungsgemäße Verbundwerkstoff weist vorzugsweise zumindest einen Träger auf, der zumindest Aluminium, Silicium, Cobalt, Mangan, Zink, Vanadium, Molybdän, Indium, Blei, Wismuth, Silber, Gold, Nickel, Kupfer, Eisen, Titan, Platin, Edelstahl, Stahl, Messing, eine Legierung aus diesen Materialien oder ein mit Au, Ag, Pb. Ti, Ni, Cr, Pt, Pd, Rh, Ru und/oder Ti beschichtetes Material aufweist.

Die im erfindungsgemäßen Verbundwerkstoff vorhandene anorganische Komponente kann zumindest eine Verbindung aus zumindest einem Metall, Halbmetall oder Mischmetall mit zumindest einem Element der 3 bis 7. Hauptgruppe des Periodensystems oder zumindest eine Mischung dieser Verbindungen aufweisen. Dabei können die Verbindungen der Metaile, Halbmetalle oder Mischmetalle zumindest Elemente der Nebengruppenelemente und der 3, bis 5. Hauptgruppe oder zumindest Elemente der Nebengruppenelemente oder der 3. bis 5. Hauptgruppe aufweisen, wobei diese Verbindungen eine Korngröße von 0,001 bis 25 µm aufweisen. Vorzugsweise weist die anorganische Komponente zumindest eine Verbindung eines Elementes der 3. bis 8. Nebengruppe oder zumindest eines Elementes der 3. bis 5. Hauptgruppe mit zumindest einem der Elemente Te, Se, S, O, Sb, As, P, N, Ge, Si, C, Ga, Al oder B oder zumindest eine Verbindung eines Elementes der 3. bis 8. Nebengruppe und zumindest eines Elementes der 3. bis 5. Hauptgruppe mit zumindest einem der Elemente Te, Se, S, O, Sb, As, P, N, Ge, Si, C, Ga, Al oder B oder eine Mischung dieser Verbindungen auf. Besonders bevorzugt weist die anorganische Komponente zumindest eine Verbindung zumindest eines der Elemente Sc, Y, Ti, Zr, V, Nb, Cr, Mo, W, Mn, Fe, Co, B, Al, Ga, In, Tl, Si, Ge, Sn, Pb, Sb oder Bi mit zumindest einem der Elemente Te, Se, S, O, Sb, As, P, N, C, Si, Ge oder Ga, wie z.B. TiO₂, Al₂O₃, SiO₂, ZrO₂, Y₂O₃, BC, SiC, Fe₃O₄, SiN, SiP, Nitride, Sulfate, Phosphide, Silicide, Spinelle oder Yttriumaluminiumgranat, oder eines dieser der Elemente selbst auf Die anorganische Komponente kann auch Alumosilicate, Aluminiumphosphate, Zeolithe oder partiell ausgetauschte Zeolithe, wie z.B. ZSM-5, Na-ZSM-5 oder Fe-ZSM-5 oder amorphe mikroporöse Mischoxide, die bis zu 20 % nicht hydrolisierbare organische Verbindungen enthalten können, wie z.B. Vanadinoxid-Siliziumoxid-Glas oder Aluminiumoxid-Siliciumoxid-Methylsiliciumsesduioxid-Gläser, aufweisen.

Vorzugsweise liegt zumindest eine anorganische Komponente in einer Korngrößenfraktion mit einer Korngröße von 1 bis 250 nm oder mit einer Korngröße von 260 bis 10 000 nm vor.

Es kann vorteilhaft sein, wenn der erfindungsgemäße Verbundwerkstoff zumindest zwei Korngrößenfraktionen zumindest einer anorganischen Komponente aufweist. Ebenso kann es vorteilhaft sein, wenn der erfindungsgemäße Verbundwerkstoff zumindest zwei Korngrößenfraktionen von zumindest zwei anorganischen Komponenten aufweist. Das Korngrößenverhältnis kann von 1 : 1 bis 1 : 10 000, vorzugsweise von 1 : 1 bis 1 : 100 betragen. Das Mengenverhältnis der Korngrößenfraktionen im Verbundwerkstoff kann vorzugsweise von 0,01 : 1 bis 1 : 0,01 betragen.

Die Stoffdurchlässigkeit des erfindungsgemäßen Verbundwerkstoffes wird durch die Korngröße der verwendeten zumindest einen anorganischen Komponente auf Teilchen mit einer bestimmten maximalen Größe begrenzt.

Die eine anorganische Komponente aufweisende Suspension, über welche der erfindungsgemäße Verbundwerkstoff erhältlich ist, kann zumindest eine Flüssigkeit, ausgewählt aus Wasser, Alkohol und Säure oder eine Kombination dieser Flüssigkeiten aufweisen.

In einer besonders bevorzugten Ausführungsart des erfindungsgemäßen Verbundwerkstoffes, der hydrophobe Eigenschaften aufweist, kann dieser, ohne Zerstörung der im Inneren des Trägers und/oder auf dem Träger verfestigten anorganischen Komponente, biegbar ausgeführt sein. Vorzugsweise ist der erfindungsgemäße Verbundwerkstoff auf einen kleinsten Radius von bis zu 1 mm biegbar.

Die Porengrößen des hydrophobe Eigenschaften aufweisenden, stoffdurchlässigen Verbundwerkstoffes beträgt von 1 nm bis 0,5 µm.

Das erfindungsgemäße Verfahren zur Herstellung eines stoffdurchlässigen Verbundwerkstoffes gemäß zumindest einem der Ansprüche 1 bis 8 wird im folgenden beispielhaft beschrieben, ohne darauf beschränkt zu sein.

Vorzugsweise wird ein wie in WO-96 00198-A beschriebener Verbundwerkstoff verwendet. Bei diesem Verfahren zur Herstellung eines stoffdurchlässigen Verbundwerkstoffes wird in und auf zumindest einen durchbrochenen und stoffdurchlässigen Träger, zumindest eine Suspension gebracht, die zumindest eine anorganische Komponente, aus zumindest einer Verbindung zumindest eines Metalls, eines Halbmetalls oder eines Mischmetalls mit zumindest einem der Elemente der 3. bis 7. Hauptgruppe, aufweist und durch zumindest einmaliges Erwärmen wird die Suspension auf und im Trägermaterial verfestigt.

In diesem Verfahren kann es vorteilhaft sein, die Suspension auf und in oder aber auf oder in zumindest einen Träger durch Aufdrucken, Aufpressen, Einpressen Aufrollen, Aufrakeln, Aufstreichen, Tauchen, Spritzen oder Aufgießen zu bringen.

Der durchbrochene und stoffdurchlässige Träger auf den oder in den oder aber auf den und in den zumindest eine Suspension gebracht wird kann zumindest ein Material, ausgewählt aus Kohlenstoff, Metallen, Legierungen, Keramiken, Mineralien, Kunststoffen, amorphen Substanzen, Naturprodukten, Verbundstoffen, Verbundwerkstoffen oder aus zumindest einer Kombination dieser Materialien aufweisen. Als stoffdurchlässige Träger können auch solche verwendet werden, die durch Behandlung mit Laserstrahlen oder Ionenstrahlen stoffdurchlässig gemacht wurden. Vorzugsweise werden als Träger Gewebe aus Fasern oder Drähten der oben angegeben Materialien, wie z.B. Metallgewebe oder Kunststoffgewebe verwendet.

Die verwendete Suspension, die zumindest eine anorganische Komponente und zumindest ein Metalloxidsol, zumindest ein Halbmetalloxidsol oder zumindest ein Mischmetalloxidsol oder eine Mischung dieser Sole aufweisen kann, kann durch Suspendieren zumindest einer anorganischen Komponente in zumindest einem dieser Sole hergestellt werden.

Die Sole werden durch Hydrolisieren zumindest einer Verbindung, vorzugsweise zumindest einer Metallverbindung, zumindest einer Halbmetallverbindung oder zumindest einer Mischmetallverbindung mit zumindest einer Flüssigkeit, einem Feststoff oder einem Gas erhalten, wobei es vorteilhaft sein kann, wenn als Flüssigkeit z.B. Wasser, Alkohol oder eine Säure, als Feststoff Eis oder als Gas Wasserdampf oder zumindest eine Kombination dieser Flüssigkeiten, Feststoffe oder Gase eingesetzt wird. Ebenso kann es vorteilhaft sein, die zu hydrolisierende Verbindung vor der Hydrolyse in Alkohol oder eine Säure oder eine Kombination dieser Flüssigkeiten zu geben. Als zu hydrolisierende Verbindung wird vorzugsweise zumindest ein Metallnitrat, ein Metallchlorid, ein Metallcarbonat, eine Metallalkoholatverbindung oder zumindest eine Halbmetallalkoholatverbindung, besonders bevorzugt zumindest eine Metallalkoholatverbindung, ein Metallnitrat, ein Metallchlorid, ein Metallcarbonat oder zumindest eine Halbmetallalkoholatverbindung ausgewählt aus den Verbindungen der Elemente Ti, Zr, Al, Si, Sn, Ce und Y oder der Lanthanoiden und Actinoiden, wie z.B. Titanalkoholate, wie z.B. Titanisopropylat, Siliziumalkoholate, Zirkoniumalkoholate, oder ein Metallnitrat, wie z.B. Zirkoniumnitrat, hydrolisiert.

Bei diesem Verfahren kann es vorteilhaft sein, die Hydrolyse der zu hydrolisierenden Verbindungen mit zumindest dem halben Molverhältnis Wasser, Wasserdampf oder Eis, bezogen auf die hydrolisierbare Gruppe, der hydrolisierbaren Verbindung, durchzuführen. Die hydrolisierte Verbindung kann zum Peptisieren mit zumindest einer organischen oder anorganischen Säure, vorzugsweise mit einer 10 bis 60 %igen organischen oder anorganischen Säure, besonders bevorzugt mit einer Mineralsäure, ausgewählt aus Schwefelsäure, Salzsäure, Perchlorsäure, Phosphorsäure und Salpetersäure oder einer Mischung dieser Säuren behandelt werden.

Es können nicht nur Sole verwendet werden, die wie oben beschrieben hergestellt wurden, sondern auch handelsübliche Sole, wie z.B. Titannitratsol, Zirkonnitratsol oder Silicasol.

Es kann vorteilhaft sein, wenn zumindest eine anorganische Komponente, welche eine Korngöße von 1 bis 10 000 nm aufweist, in zumindest einem Sol suspendiert wird. Vorzugsweise wird eine anorganische Komponente, die zumindest eine Verbindung, ausgewählt aus Metallverbindungen, Halbmetallverbindungen, Mischmetallverbindungen und Metallmischverbindungen mit zumindest einem der Elemente der 3. bis 7. Hauptgruppe, oder zumindest eine Mischung dieser Verbindungen aufweist, suspendiert. Besonders bevorzugt wird zumindest eine anorganische Komponente, die zumindest eine Verbindung aus den Oxiden der Nebengruppenelemente oder den Elementen der 3. bis 5. Hauptgruppe, vorzugsweise Oxide ausgewählt aus den Oxiden der Elemente Sc, Y, Ti, Zr, Nb, Ce, V, Cr, Mo, W, Mn, Fe, Co, B, Al, In, Tl, Si, Ge, Sn, Pb und Bi, wie z.B. Y₂O₃, ZrO₂, Fe₂O₃, Fe₅O₄, SiO₂, Al₂O₃ aufweist, suspendiert. Die anorganische Komponente kann auch Alumosilicate, Aluminiumphospate, Zeolithe oder partiell ausgetauschte Zeolithe, wie z.B. ZSM-5, Na-ZSM-5 oder Fe-ZSM-5 oder amorphe mikroporöse Mischoxide, die bis zu 20 % nicht hydrolisierbare organische Verbindungen enthalten können, wie z.B. Vanadinoxid-Siliziumoxid-Glas oder Aluminiumoxid-Siliciumoxid-Methylsiliciumsesquioxid-Gläser, aufweisen.

Vorzugsweise beträgt der Massenanteil der suspendierten Komponente das 0,1 bis 500-fache der eingesetzten hydrolisierten Verbindung.

Durch die geeignete Wahl der Korngröße der suspendierten Verbindungen in Abhängigkeit von der Größe der Poren, Löcher oder Zwischenräume des durchbrochenen stoffdurchlässigen Trägers, aber auch durch die Schichtdicke des erfindungsgemäßen Verbundwerkstoffes sowie das anteilige Verhältnis Sol-Lösungsmittel-Metalloxid läßt sich die Rißfreiheit im stoffdurchlässigen Verbundwerkstoff optimieren.

Bei der Verwendung eines Maschengewebes mit einer Maschenweite von z.B. 100 µm können zur Erhöhung der Rißfreiheit vorzugsweise Suspensionen verwendet werden, die eine suspendierte Verbindung mit einer Korngröße von mindestens 0,7 µm aufweist. Im allgemeinen sollte das Verhältnis Korngröße zu Maschen- bzw. Porengröße von 1 : 1 000 bis 50 : 1 000 betragen. Der erfindungsgemäße Verbundwerkstoff kann vorzugsweise eine Dicke von 5 bis 1000 µm, besonders bevorzugt von 50 bis 150 µm, aufweisen. Die Suspension aus Sol und zu suspendierenden Verbindungen weist vorzugsweise ein Verhältnis Sol zu zu suspendierenden Verbindungen von 0,1 : 100 bis 100 : 0,1, vorzugsweise von 0,1 : 10 bis 10 : 0,1 Gewichtsteilen auf.

Die auf und im Träger vorhandenen Suspension wird bei diesem Verfahren durch Erwärmen dieses Verbundes auf 50 bis 1 000 °C verfestigt werden. In einer besonderen Ausführungsvariante dieses Verfahrens wird dieser Verbund für 10 min. bis 5 Stunden einer Temperatur von 50 bis 100 °C ausgesetzt. In einer weiteren besonderen Ausführungsart des erfindungsgemäßen Verfahrens wird dieser Verbund für 1 Sekunde bis 10 Minuten einer Temperatur von 100 bis 800 °C ausgesetzt.

Das Erwärmen des Verbundes kann bei diesem Verfahren mittels erwärmter Luft, Heißluft, Infrarotstrahlung, Mikrowellenstrahlung oder elektrisch erzeugter Wärme, erfolgen. In einer weiteren besonderen Ausführungsart dieses Verfahrens kann es vorteilhaft sein, wenn das Erwärmen des Verbundes unter Nutzung des Trägermaterials als elektrische Widerstandheizung erfolgt. Zu diesem Zweck kann über zumindest zwei Kontakte der Träger an eine Stromquelle angeschlossen werden. Je nach Stärke der Stromquelle und Höhe der abgegebenen Spannung heizt sich der Träger bei eingeschaltetem Strom auf und die in und auf seiner Oberfläche vorhandene Suspension kann durch diese Erwärmung verfestigt werden.

In einer besonderen Ausführungsart des erfindungsgemäßen Verfahrens kann der stoffdurchlässige Verbundwerkstoff, der hydrophobe Eigenschaften aufweist dadurch hergestellt werden, dass in dem oben bzw. in WO-96 00198-A beschriebenen Verfahren zur Herstellung eines stoffdurchlässigen Verbundwerkstoffes ein Sol und/oder eine Suspension eingesetzt wird, dem bzw. der feinverteilte Wachse und/oder Polymere zugegeben werden. Bei der Verfestigung des Sols bzw. der Suspension werden die Wachse und/oder Polymere bei Temperaturen unterhalb von 500°C aufgeschmolzen und legen sich als dünner Film um die Partikel herum, so dass die gesamte innere und äußere Oberfläche des Verbundwerkstoffs durch eine dünne Wachs- und/oder Polymerschicht bedeckt ist. Zum Einsatz können hier nahezu alle bekannten Polymere oder Wachse kommen, die unterhalb von 500°C schmelzen und/oder fließfähig werden, wie z.B. Polyethylen, Polypropylen, Polyvinylchlorid, Polystyrol, Polytetrafluorethylen, Polyvinylidenfluorid, Polyvinylidenchlorid, Polyisopren, Polybutadien, Polyimid, Polyetherimid, Polysulfon, Polyethersulfon, Polyacrylat, Polymethacrylat, Polyimidazol oder ein Gemisch dieser Polymere. Die Wachse und/oder Polymere müssen nicht als hydrophobe Materialien vorliegen, sondern es ist völlig ausreichend, wenn sie die hydrophoben Eigenschaften während der Heizphase bei einer Temperatur von bis zu 500 °C durch eine chemische und/oder physikalische Veränderung ihrer Struktur erhalten.

In einer weiteren Ausführungsart des erfindungsgemäßen Verfahrens werden stoffdurchlässige Verbundwerkstoffe dadurch hergestellt, dass zu einem wie oben beschrieben hergestellten Sol oder einer wie oben beschrieben hergestellten Suspension, mit der ein Träger in der oben bzw. in WO-96 00198-A beschriebenen Weise behandelt wird, Alkyl-, Aryl- oder Fluoralkylsilane gegeben werden. Während des Verfestigungsprozesses kommt es zu einer teilweisen, aber ausreichenden Ausrichtung der Alkyl-, Aryl- oder Fluoralkylketten, so' dass die Oberflächen hydrophob ausgestattet sind. Die Temperung auf bis zu 500 °C führt zu keinem wesentlichen Abbau der Alkylkomponenten. Ein solcher hydrophobierter stoffdurchlässiger Verbundwerkstoff kann bei Temperaturen von bis zu 250 °C eingesetzt werden.

Durch die hier beschriebenen Arten von Verfahren zur Herstellung von stoffdurchlässigen Verbundwerkstoffen, die hydrophobe Eigenschaften aufweisen, sind Materialien mit Porengrößen im Bereich von 1 nm bis 0,5 µm zugänglich, die vollständig hydrophobiert vorliegen.

Die stoffdurchlässigen Verbundwerkstoffe gemäß zumindest einem der Ansprüche 1 bis 9, die hydrophobe Eigenschaften aufweisen, können in verschiedenen Bereichen der Stofftrennung eingesetzt werden. Hier sind vor allem die im folgenden beschriebenen Anwendungen zu nennen, wobei die Anwendung der Verbundwerkstoffe nicht hierauf beschränkt ist.

Der erfindungsgemäße Verbundwerkstoff kann bei der Membrandestillation als Membran verwendet werden. Bei der Membrandestillation eingesetzte Membranen zeichnen sich dadurch aus, daß das flüssige Stoffgemisch, welches durch die Destillation getrennt werden soll die Membranen nicht benetzt. Gleichzeitig sollen die Membranen sehr temperaturstabil sein und sich nicht bei höheren Temperaturen verändern. Eine Erhöhung der Destillationstemperatur hat zudem häufig auch noch verfahrenstechnische Vorteile. Die erfindungsgemäßen stoffdurchlässigen Verbundwerkstoffe, die hydrophobe Eigenschaften aufweisen, sind in Membrandestillationen den bekannten Membranen vorzuziehen, da sie über einen größeren Temperaturbereich eingesetzt werden können, ohne daß sie einer Änderungen ihrer Eigenschaften unterliegen, gleichzeitig lassen sie sich in einem weiten Bereich von Porengrößen herstellen und können mit Dicken von weniger als 100 µm hergestellt werden.

Der erfindungsgemäße Verbundwerkstoff kann ebenfalls bei der Pervaporation verwendet werden. Genau wie bei der Membrandestillation findet man auch verfahrenstechnische Vorteile beim Einsatz der beschriebenen erfindungsgemäßen hydrophoben stoffdurchlässigen Verbundwerkstoffe in der Pervaporation. Die beschriebenen Verbundwerkstoffe sind in der organophilen Pervaporation den herkömmlichen Materialien überlegen aufgrund ihrer höheren thermischen Stabilität. Durch eine besondere Ausführungsform der hydrophoben stoffdurchlässigen Verbundwerkstoffe hindurch wandern organische Moleküle schneller als Wasser, so daß hierdurch selektiv Organica aus wäßrigen Lösungen abgetrennt werden können.

Der erfindungsgemäße Verbundwerkstoff kann außerdem bei der Dampfpermeation als Membran verwendet werden. Diesem, der Pervaporation ähnlichem Verfahren, liegt der gleiche Permeationssmechanismus durch eine selektive Membran zu Grunde wie bei der Pervaporation, daher ist klar, daß auch hier eine Organica-Abtrennung mit einer besonderen Ausführungsform des Verbundwerkstoffes möglich ist. Hier ist die Temperaturstabilität des Werkstoffes von besonderer Bedeutung, da bei der Dampfpermeation gegebenenfalls bei recht hohen Temperaturen gearbeitet wird.
Die erfindungsgemäßen Verbundwerkstoffe können auch als Membrane zur Unterstützung beim Einbringen von Gasen in Flüssigkeiten verwendet werden. Beim Einbringen von Gasen in wäßrige Flüssigkeiten besteht das Problem, daß die Gasblasen häufig sehr groß sind und somit eine relativ kleine Oberfläche besitzen. Dies kann durch den Einsatz von Membranen zum Einbringen von Luft oder anderen Gasen in diese Fluide verbessert werden. Dazu wird das Gas durch die Poren einer Membran hindurch in das Fluid gedrückt. Die sehr kleinen Blasen (in Abhängigkeit vom verwendeten Porenradius der Membran) besitzen eine sehr viel größere spezifische Oberfläche als Blasen die durch andere Techniken in ein Fluid eingebracht werden. (M. J. Semmens; C. J. Gantzer; M. J. Bonnette; US 5 674 433) Es müssen allerdings Drücke aufgewendet werden, die größer sind als der "bubble-point" der entsprechenden Membran (je nach Porengröße bis zu 30 bis 40 bar). Bei Nutzung von hydrophoben stoffdurchlässigen Verbundwerkstoffen für eine solche Begasung hydrophiler Fluide, brauchen die Drücke nur größer als der hydrostatische Druck der Flüssigkeit zu sein, da die Flüssigkeit nicht in die Poren eindringen kann und es somit nicht zu den damit verbunden Effekten der Porenfüllung und dem daraus resultierenden hohen "bubble-point" kommt.

Die erfindungsgemäßen Verbundwerkstoffe können ebenfalls zur Aufkonzentrierung temperaturempfindlicher Produkte verwendet werden. Die Aufkonzentrierung oder Entwässerung sehr temperaturempfindlicher Produkte kann durch eine besondere Modulkonfiguration unter Nutzung hydrophober stoffdurchlässiger Verbundwerkstoffe erfolgen. Dabei wird auf der einen Seite der hydrophoben Trennwand das aufzukonzentrierende Fluid (z.B. ein Fruchtsaft) entlanggeführt und auf der anderen Seite wird eine extern hergestellte konzentrierte Salzlösung vorbeigeführt. Aufgrund dessen, daß es sich um eine hydrophobe Trennwand handelt, kommt es zu keinem Kontakt zwischen den beiden Flüssigkeiten. Durch den Gasraum der Poren hindurch kann aber ein Wasserdampf-Austausch erfolgen, so daß aufgrund des unterschiedlichen osmotischen Druckes die Salzlösung Wasser aufnehmen und das zu entwässernde Produkt Wasser abgeben kann.

Ebenfalls kann ein erfindungsgemäßer Verbundwerkstoff zur Membranfiltration verwendet werden. Bei der Filtration der verschiedensten Produkte mit Hilfe von Membrane stellt sich häufig das Problem, daß die Filtratleistung von der Bildung von Oberflächenschichten abhängig ist. Dieses sog. Fouling kann durch den Einsatz von sehr hydrophilen Membranen zurückgedrängt werden, aber auch durch den Einsatz von hydrophoben Filtermaterialien läßt sich das Fouling zurückdrängen. Der Fluß bei Filtrationsversuchen steigert sich bei Einsatz von hydrophoben stoffdurchlässigen Verbundwerkstoffen vor allem immer dann, wenn Organica filtriert werden und die Foulingschichten aus sehr hydrophilen Ablagerungen bestehen. Die Leistungssteigerungen durch Einsatz der hydrophoben stoffdurchlässigen Verbundwerkstoffe können bei einer solchen Konstellation im Bereich von 10 % bis zu 80 % liegen.

Die erfindungsgemäßen Verbundwerkstoffe können auch als Membranreaktoren Verwendung finden. Bei bestimmten Bauformen von Membranreaktoren kann es von Vorteil sein, hydrophobe Membranen zu verwenden. Diese sind in Membranreaktoren von Vorteil, wenn hydrophobe und hydrophile Bestandteile des Reaktionsgemisches voneinander getrennt werden müssen oder selektiv durch eine Membran zudosiert werden sollen. In diesen Fällen eignen sich die erfindungsgemäßen hydrophoben stoffdurchlässigen Verbundwerkstoffe sehr gut, da sie wie bereits angeführt über einen größeren Temperaturbereich konstante Eigenschaften zeigen. Die erfindungsgemäßen Verbundwerkstoffe können z.B. als Membranen in Membranreaktoren, in denen die Oxidation von Aromaten, z.B. die Direktoxidation von Benzol zu Phenol, abläuft, verwendet werden.

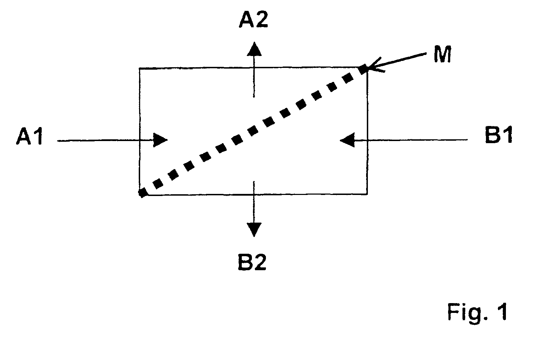

Fig. 1 zeigt schematisch eine Anwendungsmöglichkeit des erfindungsgemäßen hydrophoben, stofidurchlässigen Verbundwerkstoffes.

In Fig. 1 ist eine Aufkonzentrationszelle schematisch dargestellt. Diese wird durch den hydrophoben, stoffdurchlässigen Verbundwerkstoff **M** in zwei Kammern unterteilt. In die eine Kammer strömt die Flüssigkeit **A1**, der Wasser entzogen werden soll. Diese kann z.B. ein Fruchtsaft sein. In die andere Kammer strömt eine Flüssigkeit **B1**, die das Wasser aufnehmen soll. Diese Flüssigkeit kann z.B. eine konzentrierte Salzlösung sein. Durch den hydrophoben, stoffdurchlässigen Verbundwerkstoff kann Wasser aus dem Fruchtsaft in Form von Dampf in die konzentrierte Salzlösung übertreten. Da beide Lösungen (A1 und B1) überwiegend Wasser enthalten, findet eine direkte Durchmischung der Lösungen auf Grund der hydrophoben Eigenschaften des Verbundwerkstoffes aber nicht statt. Die an Wasser abgereicherte Lösung **A2** wird aus der einen Kammer und die Salzlösung, die das Wasser aufgenommen hat **B2** wird aus der anderen Kammer ausgeschleust.

Der erfindungsgemäße Verbundwerkstoff, das erfindungsgemäße Verfahren zu dessen Herstellung und seine Verwendung wird in den folgenden Beispielen näher beschrieben, ohne darauf beschränkt zu sein.

### Beispiel 1.1 Herstellung eines Verbundwerkstoff nach dem in PCT/EP98/05939 beschriebenen Verfahren

120 g Titantetraisopropylat wurden mit 140 g entionisiertem Eis unter kräftigem Rühren bis zur Feinstverteilung des entstehenden Niederschlages gerührt. Nach Zugabe von 100 g 25 °ige Salzsäure wurde bis zum Klarwerden der Phase gerührt und 280 g α-Aluminiumoxid des Typs CT3000SG der Fa. Alcoa, Ludwigshafen, zugegeben und über mehrere Tage bis zum Auflösen der Aggregate gerührt. Anschließend wurde diese Suspension in dünner Schicht auf ein Metallnetz aufgebracht und bei 550 °C innerhalb kürzester Zeit verfestigt.

### Beispiel 1.2.a.1 Hydrophobierung durch Zugabe von Silanen zum Sol der Herstellung des Verbundwerkstoffs

50 g Titantetraisopropylat und 40 g Dynasilan F 8261 wurden mit 130 g entionisiertem Eis unter kräftigem Rühren bis zur Feinstverteilung des entstehenden Niederschlages gerührt. Nach Zugabe von 100 g 25 %iger Salzsäure wurde bis zum Klarwerden der Phase gerührt und 280 g α-Aluminiumoxid des Typs CT3000SG der Fa. Alcoa, Ludwigshafen, zugegeben und über 3 Tage bis zum Auflösen der Aggregate gerührt. Anschließend wurde diese Suspension auf ein Edelstahlgewebe aufgebracht und bei ca. 500 °C innerhalb kürzester Zeit verfestigt.

### Beispiel 1.2.a.2 Hydrophobierung durch Zugabe von Silanen zum Sol bei der Herstellung des Verbundwerkstoffs

50 g Titantetraisopropylat und 30 g i-Butyltriethoxisilan wurden mit 130 g entionisiertem Eis unter kräftigem Rühren bis zur Feinstverteilung des entstehenden Niederschlages gerührt. Nach Zugabe von 100 g 25 %iger Salzsäure wurde bis zu Klarwerden der Phase gerührt und 280 g α-Aluminiumoxid des Typs CT3000SG der Fa. Alcoa, Ludwigshafen zugegeben und über mehrere Tage bis zum Auflösen der Aggregate gerührt. Anschließend wurde diese Suspension auf ein Drahtnetz aufgebracht und bei ca. 500 °C innerhalb kürzester Zeit verfestigt.

### Beispiel 1.2.a.3 Hydrophobierung durch Zugabe von Silanen zum Sol bei der Herstellung des Verbundwerkstoffs

50 g Titantetraisopropylat und 30 g Methyltriethoxysilan wurden mit 130 g entionisiertem Eis unter kräftigem Rühren bis zur Feinstverteilung des entstehenden Niederschlages gerührt. Nach Zugabe von 100 g 25 %iger Salzsäure wurde bis zum Klarwerden der Phase gerührt und 280 g α-Aluminiumoxid des Typs CT3000SG der Fa. Alcoa, Ludwigshafen, zugegeben und über mehrere Tage bis zum Auflösen der Aggregate gerührt. Anschließend wurde diese Suspension auf ein Drahtnetz aufgebracht und bei 500 °C innerhalb kürzester Zeit verfestigt.

### Beispiel 1.2.b.1 Hydrophobierung durch Zugabe von Silanen zum Sol bei der Herstellung des Verbundwerkstoffs

60 g Tetraethylorthosilicat und 40 g Dynasilan F 8261 wurden mit 120 g entionisiertem Eis unter kräftigem Rühren bis zur Feinstverteilung des entstehenden Niederschlages gerührt. Nach
Zugabe von 40 g 65 %iger Salpetersäure wurde bis zum Klarwerden der Phase gerührt. 280 g α-Aluminiumoxid des Typs CT530SG der Fa. Alcoa, Ludwigshafen wurden zugegeben und das Sol über 3 Tage bis zum Auflösen aller Aggregate gerührt. Anschließend wurde diese Suspension auf ein Aluminiumnetz aufgebracht und bei 500 °C innerhalb kürzester Zeit verfestigt.

### Beispiel 1.2.b.2 Hydrophobierung durch Zugabe von Silanen zum Sol bei der Herstellung des Verbundwerkstoffs

Der Versuch aus Beispiel 1.2.b.1 wurde wiederholt, aber es wurden 40 g Methyltriethoxysilan an Stelle des Dynasilan F 8261 eingesetzt.

### Beispiel 1.2.b.3 Hydrophobierung durch Zugabe von Silanen zum Sol bei der Herstellung des Verbundwerkstoffs

Der Versuch aus Beispiel 1.2.b.1 wurde wiederholt, aber es wurden 40 g i-Butyltriethoxysilan an Stelle des Dynasilan F 8261 eingesetzt.

### Beispiel 1.3.a.1 Hydrophobierung durch Zugabe von Wachsen und / oder Polymeren

80 g Titantetraisopropylat wurden mit 20 g Wasser hydrolysiert und der entstandene Niederschlag wurde mit 120 g Salpetersäure (25 %ig) peptisiert. Diese Lösung wurde bis zum Klarwerden gerührt und nach Zugabe von 40 g Titandioxid der Fa. Degussa (P25) und 5 g Polytetrafluorethylen Pulver wurde bis zum Auflösen der Agglomerate gerührt. Anschließend wurde diese Suspension auf einen porösen Träger entsprechend Beispiel 1.1 aufgebracht und bei 500 °C innerhalb innerhalb kürzester Zeit verfestigt.

### Beispiel 1.3.a.2 Hydrophobierung durch Zugabe von Wachsen und / oder Polymeren

Der Versuch wurde mit den Parametern wie in Beispiel 1.3.a.1 wiederholt. Statt 5 g Polytetrafluorethylen wurden 5 g Polyethylen eingesetzt.

### Beispiel 1.3.a.3 Hydrophobierung durch Zugabe von Wachsen und / oder Polymeren

Der Versuch wurde mit den Parametern wie in Beispiel 1.3.a.1 wiederholt. Statt 5 g Polytetrafluorethylen wurden 5 g Polypropylen eingesetzt.

### Beispiel 1.3.b Hydrophobierung durch Zugabe von Wachsen und / oder Polymeren

80 g Titantetraisopropylat wurden mit 20 g Wasser hydrolysiert und der entstandene Niederschlag wurde mit 120 g Salpetersäure (25 %ig) peptisiert. Diese Lösung wurde bis zum Klarwerden gerührt und nach Zugabe von 40 g Titandioxid der Fa. Degussa (P25) und 15 g Polyimid-Pulver wurde bis zum Auflösen der Agglomerate gerührt. Anschließend wurde diese Suspension auf einen porösen Träger entsprechend Beispiel 1.1 aufgebracht und bei 500 °C innerhalb kürzester Zeit verfestigt. Eine gute Hydrophobierung erfolgt in diesem Fall erst nach vollständiger Umwandlung (Carbonisierung und Imidisierung) des Polyimids.

### Beispiel 1.4 Randwinkelmessungen

In der folgenden Tabelle sind die Ergebnisse der Randwinkelbestimmungen nach der Methode des sitzenden Tropfens, für Wasser gegenüber Luft aufgeführt, die an den in den Beispielen 1.1 bis 1.3.b hergestellten Verbundwerkstoffen vorgenommen wurden.

| Beispiel | Hydrophobierende Komponente | Randwinkel [°] |
|---|---|---|
| 1.1 | --- | 0 |
| 1.2.a.1 | Dynasilan F 8261 | 139 |
| 1.2.a.2 | Methyltriethoxysilan | 134 |
| 1.2.a.3 | i-Butyltriethoxysilan | 110 |
| 1.2.b.1 | Dynasilan F 8261 | 141 |
| 1.2.b.2 | Methyltriethoxysilan | 134 |
| 1.2.b.3 | i-Butyltriethoxysilan | 109 |
| 1.3.a.1 | Polytetrafluorethylen | 148 |
| 1.3.a.2 | Polyethylen | 132 |
| 1.3.a.3 | Polypropylen | 136 |
| 1.3.b | Polyimid | 108 |

## Patentansprüche

1. Stoffdurchlässiger, hydrophobe Eigenschaften aufweisender Verbundwerkstoff auf Basis zumindest eines durchbrochenen und stoffdurchlässigen Trägers, der auf zumindest einer Seite des Trägers und im Inneren des Trägers eine anorganische Komponente aufweist, die im wesentlichen eine Verbindung aus einem Metall, einem Halbmetall und/oder einem Mischmetall mit zumindest einem Element der 3. bis 7. Hauptgruppe aufweist,
**dadurch** hergestellt, dass
in und auf dem durchbrochenen Träger eine Suspension, die die anorganische Komponente und ein Metalloxidsol, ein Halbmetalloxidsol oder zumindest ein Mischmetalloxidsol oder eine Mischung dieser Sole aufweist, gebracht und durch zumindest einmaliges Erwärmen auf und im Trägermaterial verfestigt wird,
**dadurch gekennzeichnet, dass** zumindest ein hydrophobes Material und/oder ein Hydrophobisierungsmittel dem Sol und/oder der Suspension zugegeben wird und dass die inneren und äußeren Oberflächen des Verbundwerkstoffes, der Porengrößen von 1 nm bis 0,5 µm aufweist,
hydrophobe Schichten tragen.

2. Stoffdurchlässiger Verbundwerkstoff nach Anspruch 1,
**dadurch gekennzeichnet, dass**
die hydrophoben Schichten Alkyl-, Fluoralkyl- und/oder Arylgruppen aufweisen.

3. Stoffdurchlässiger Verbundwerkstoff nach Anspruch 1,
**dadurch gekennzeichnet, dass**
die hydrophoben Schichten Wachs- und/oder Polymerschichten tragen.

4. Stoffdurchlässiger Verbundwerkstoff nach zumindest einem der Ansprüche 1 bis 3,
**dadurch gekennzeichnet, dass**
das in den hydrophoben Schichten vorhandene hydrophobe Material einen Schmelz- und/oder Erweichungspunkt unterhalb von 500 °C besitzt.

5. Stoffdurchlässiger Verbundwerkstoff nach zumindest einem der Ansprüche 1 bis 4,
**dadurch gekennzeichnet,**
**dass** die hydrophoben Schichten zumindest ein hydrophobes Material ausgewählt aus einem Alkyl-, Fluoralkyl- oder Arylsilan und/oder einem Wachs und/oder Polyethylen, Polypropylen, Polyvinylchlorid, Polystyrol, Polytetrafluorethylen, Polyvinylidenfluorid, Polyvinylidenchlorid, Polyisopren, Polybutadien, thermisch behandeltem Polyimid, thermisch behandeltem Polyetherimid, Polysulfon, Polyethersulfon, Polyacrylat, Polymethacrylat, Polyimidazol oder ein Gemisch dieser Polymere aufweisen.

6. Stoffdurchlässiger Verbundwerkstoff nach zumindest einem der Ansprüche 1 bis 5,
**dadurch gekennzeichnet,**
**dass** der hydrophobe, stoffdurchlässige Verbundwerkstoff einen Anteil an hydrophobem Material von 0,0001 Gew.-% bis 40,0 Gew.-% aufweist.

7. Stoffdurchlässiger Verbundwerkstoff nach Anspruch 6,
**dadurch gekennzeichnet,**
**dass** der hydrophobe, stoffdurchlässige Verbundwerkstoff einen Anteil an hydrophobem Material von 0,01 % bis 20 % aufweist.

8. Stoffdurchlässiger Verbundwerkstoff nach zumindest einem der Ansprüche 1 bis 7,
**dadurch gekennzeichnet,**
**dass** sich das hydrophobe Material chemisch und physikalisch oder chemisch oder physikalisch vom bei der Herstellung des Verbundwerkstoffes eingesetzten Material unterscheidet.

9. Verfahren zur Herstellung eines stoffdurchlässigen, hydrophobe Eigenschaften aufweisenden Verbundwerkstoffes auf Basis zumindest eines durchbrochenen und stoffdurchlässigen Trägers, der auf zumindest einer Seite des Trägers und im Inneren des Trägers eine anorganische Komponente aufweist, die im wesentlichen eine Verbindung aus einem Metall, einem Halbmetall und/oder einem Mischmetall mit zumindest einem Element der 3. bis 7. Hauptgruppe aufweist, bei welchem auf zumindest einen durchbrochenen und stoffdurchlässigen Träger zumindest eine Suspension gebracht wird, die zumindest eine anorganische Komponente aus zumindest einer Verbindung zumindest eines Metalls, eines Halbmetalls oder eines Mischmetalls mit zumindest einem der Elemente der 3. bis 7. Hauptgruppe und ein Sol aufweist, dem als zumindest ein hydrophobes Material oder Hydrophobisierungsmittel Wachs und/oder Polymer, die unterhalb von 500 °C schmelzen und/oder fließfähig werden, zugegeben werden, und diese Suspension durch zumindest einmaliges Erwärmen auf und im Trägermaterial verfestigt wird, wobei bei der Verfestigung die Wachse und/oder Polymere bei einer Temperatur unterhalb von 500 °C aufgeschmolzen werden.

10. Verfahren nach Anspruch 9,
**dadurch gekennzeichnet,**
**dass** ein Wachs oder ein Polymer, ausgewählt aus Polyethylen, Polypropylen, Polyvinylchlorid, Polystyrol, Polytetrafluorethylen, Polyvinylidenfluorid, Polyvinylidenchlorid, Polyisopren, Polybutadien, Polyimid, Polyetherimid, Polysulfon, Polyethersulfon, Polyacrylat, Polymethacrylat, Polyimidazol oder ein Gemisch dieser Polymere eingesetzt wird.

11. Verfahren zur Herstellung eines stoffdurchlässigen, hydrophobe Eigenschaften aufweisenden Verbundwerkstoffes auf Basis zumindest eines durchbrochenen und stoffdurchlässigen Trägers, der auf zumindest einer Seite des Trägers und im Inneren des Trägers eine anorganische Komponente aufweist, die im wesentlichen eine Verbindung aus einem Metall, einem Halbmetall und/oder einem Mischmetall mit zumindest einem Element der 3. bis 7. Hauptgruppe aufweist, bei welchem auf zumindest einen durchbrochenen und stoffdurchlässigen Träger zumindest eine Suspension gebracht wird, die zumindest eine anorganische Komponente aus zumindest einer Verbindung zumindest eines Metalls, eines Halbmetalls oder eines Mischmetalls mit zumindest einem der Elemente der 3. bis 7. Hauptgruppe und ein Sol aufweist, dem als zumindest ein hydrophobes Material oder hydrophobierendes Material Alkyl-, Aryl- oder Fluoralkylsilane zugegeben werden, und diese Suspension durch zumindest einmaliges Erwärmen auf und im Trägermaterial verfestigt wird.

12. Verfahren nach zumindest einem der Ansprüche 9 bis 11,
**dadurch gekennzeichnet,**
**dass** ein Sol eingesetzt wird, welches von 0,001 Gew.-% bis 50 Gew.-% hydrophobes oder hydrophobierendes Material aufweist

13. Verfahren nach Anspruch 12,
**dadurch gekennzeichnet,**
**dass** ein Sol eingesetzt wird, welches von 0,01 Gew.-% bis 25 Gew.-% hydrophobes oder hydrophobierendes Material aufweist.

14. Verfahren nach zumindest einem der Ansprüche 9 bis 13,
**dadurch gekennzeichnet,**
**dass** das hydrophobe bzw. hydrophobierende Material oder das Polymer oder der Wachs durch eine Behandlung chemisch und physikalisch oder chemisch oder physikalisch verändert wird.

15. Verwendung eines Verbundwerkstoffes gemäß zumindest einem der Ansprüche 1 bis 8 als Membran bei Membrandestillationen.

16. Verwendung eines Verbundwerkstoffes gemäß zumindest einem der Ansprüche 1 bis 8 in der Pervaporation

17. Verwendung eines Verbundwerkstoffes gemäß zumindest einem der Ansprüche 1 bis 8 in der Dampfpermeation.

18. Verwendung eines Verbundwerkstoffes gemäß zumindest einem der Ansprüche 1 bis 8 für die Aufkonzentrierung temperaturempfindlicher Stoffe.

19. Verwendung eines Verbundwerkstoffes gemäß zumindest einem der Ansprüche 1 bis 8 als Membran in Membranreaktoren.

20. Verwendung eines Verbundwerkstoffes gemäß zumindest einem der Ansprüche 1 bis 8 als Membran in der Membranfiltration.

21. Verwendung eines Verbundwerkstoffes gemäß zumindest einem der Ansprüche 1 bis 8 zum Einbringen von Gasen in Flüssigkeiten.

## Claims

1. A permeable composite material having hydrophobic properties, based on at least one perforate and permeable support and having on at least one side of the support and in the interior of the support an inorganic component comprising essentially a compound of a metal, semimetal and/or mixed metal with at least one element from main groups 3 to 7, produced by bringing a suspension comprising the inorganic component and a metal oxide sol, a semimetal oxide sol or at least one mixed metal oxide sol, or mixture of these sols, in and on the perforate support and solidifying it on and in the support material by heating at least once, **characterized in that** at least one hydrophobic material and/or one hydrophobicizing agent is added to the sol and/or to the suspension and **in that** the inner and outer surfaces of the composite material, which has pore sizes of from 1 nm to 0.5 µm, carry hydrophobic layers.

2. A permeable composite material according to claim 1, **characterized in that** the hydrophobic layers have alkyl, fluoroalkyl and/or aryl groups.

3. A permeable composite material according to claim 1, **characterized in that** the hydrophobic layers carry wax and/or polymer layers.

4. A permeable composite material according to at least one of claims 1 to 3, **characterized in that** the hydrophobic material present in the hydrophobic layers has a melting and/or softening point of less than 500°C.

5. A permeable composite material according to at least one of claims 1 to 4, **characterized in that** the hydrophobic layers comprise at least one hydrophobic material selected from an alkylsilane, fluoroalkylsilane or arylsilane and/or a wax and/or polyethylene, polypropylene, polyvinyl chloride, polystyrene, polytetrafluoroethylene, polyvinylidene fluoride, polyvinylidene chloride, polyisoprene, polybutadiene, thermally treated polyimide, thermally treated polyetherimide, polysulphone, polyether sulphone, polyacrylate, polymethacrylate and polyimidazole, or a mixture of these polymers.

6. A permeable composite material according to at least one of claims 1 to 5, **characterized in that** the hydrophobic permeable composite material has a fraction of hydrophobic material of from 0.0001% by weight to 40.0% by weight.

7. A permeable composite material according to claim 6, **characterized in that** the hydrophobic permeable composite material has a fraction of hydrophobic material of from 0.01% to 20%.

8. A permeable composite material according to at least one of claims 1 to 7, **characterized in that** the hydrophobic material differs chemically or physically, or chemically and physically, from the material used in the production of the composite material.

9. A process for producing a permeable composite material having hydrophobic properties, based on at least one perforate and permeable support and having on at least one side of the support and in the interior of the support an inorganic component comprising essentially a compound of a metal, semimetal and/or mixed metal with at least one element from main groups 3 to 7, in which process a suspension comprising at least one inorganic component comprising at least one compound of at least one metal, semimetal or mixed metal with at least one of the elements from main groups 3 to 7 and a sol is applied to at least one perforate and permeable support, there being added to the sol, as at least one hydrophobic material or hydrophobicizing agent, wax and/or polymer which becomes fluid and/or melts at less than 500°C, and solidifying this suspension on and in the support material by heating at least once, the wax and/or polymer being melted, in the course of the solidification, at a temperature of less than 500°C.

10. A process according to claim 9, **characterized in that** a wax or a polymer selected from polyethylene, polypropylene, polyvinyl chloride, polystyrene, polytetrafluoroethylene, polyvinylidene fluoride, polyvinylidene chloride, polyisoprene, polybutadiene, polyimide, polyetherimide, polysulphone, polyether sulphone, polyacrylate, polymethacrylate, polyimidazole or a mixture of these polymers is used.

11. A process for producing a permeable composite material having hydrophobic properties, based on at least one perforate and permeable support and having on at least one side of the support and in the interior of the support an inorganic component comprising essentially a compound of a metal, semimetal and/or mixed metal with at least one element from main groups 3 to 7, in which process a suspension comprising at least one inorganic component comprising at least one compound of at least one metal, semimetal or mixed metal with at least one of the elements from main groups 3 to 7 and a sol is applied to at least one perforate and permeable support, there being added to the sol, as at least one hydrophobic material or hydrophobicizing material, alkylsilanes, arylsilanes or fluoroalkylsilanes, and solidifying this suspension on and in the support material by heating at least once.

12. A process according to at least one of claims 9 to 11, **characterized in that** a sol is used which comprises from 0.001% by weight to 50% by weight of hydrophobic or hydrophobicizing material.

13. A process according to claim 12, **characterized in that** a sol is used which comprises from 0.01% by weight to 25% by weight of hydrophobic or hydrophobicizing material.

14. A process according to at least one of claims 9 to 13, **characterized in that** the hydrophobic or hydrophobicizing material or the polymer or the wax is modified chemically or physically, or chemically and physically, by means of a treatment.

15. The use of a composite material according to at least one of claims 1 to 8 as a membrane in membrane distillation.

16. The use of a composite material according to at least one of claims 1 to 8 in pervaporation.

17. The use of a composite material according to at least one of claims 1 to 8 in vapour permeation.

18. The use of a composite material according to at least one of claims 1 to 8 for concentrating a temperature sensitive substance.

19. The use of a composite material according to at least one of claims 1 to 8 as a membrane in a membrane reactor.

20. The use of a composite material according to at least one of claims 1 to 8 as a membrane in membrane filtration.

21. The use of a composite material according to at least one of claims 1 to 8 for introducing gas into liquid.

## Revendications

1. Matériau composite présentant des propriétés hydrophobes, perméable, à base d'au moins un support perforé et perméable, ayant sur au moins un côté du support et à l'intérieur du support un composant inorganique qui comporte pour l'essentiel un composé d'un métal, d'un métalloïde et/ou d'un métal mixte avec au moins un élément du 3^{ème} au 7^{ème} groupe principal, élaboré en appliquant dans et sur le support perforé, une suspension, qui contient le composant inorganique et un sol d'oxyde métallique, un sol d'oxyde de métalloïde ou au moins un sol d'oxyde de métal mixte ou un mélange de ces sols, et en la solidifiant sur et dans le matériau support par un chauffage au moins unique,
**caractérisé en ce que**
au moins un matériau hydrophobe et/ou un agent hydrophobant est ajouté au sol et/ou à la suspension, et les surfaces intérieure et extérieure du matériau composite, qui présente des grosseurs de pores de 1 nm à 0,5 µm, portent des couches hydrophobes.

2. Matériau composite perméable selon la revendication 1,
**caractérisé en ce que**
les couches hydrophobes comportent des groupes alkyle, fluoroalkyle, et/ou aryle.

3. Matériau composite perméable selon la revendication 1,
**caractérisé en ce que**
les couches hydrophobes portent des couches de cire et /ou de polymère.

4. Matériau composite perméable selon au moins une des revendications 1 à 3,
**caractérisé en ce que**
la matière hydrophobe des couches hydrophobes possède un point de fusion et/ou de ramollissement inférieur à 500 °C.

5. Matériau composite perméable selon au moins une des revendications 1 à 4,
**caractérisé en ce que**
les couches hydrophobes comportent au moins une matière hydrophobe choisie parmi un alkyl-, fluoroalkyl-, ou aryl- silane et/ou une cire et/ou le polyéthylène, le polypropylène, le polychlorure de vinyle, le polystyrène, le polytétrafluoréthylène, le fluorure de polyvinylidène, le chlorure de polyvinyltdène, le polyisoprène, le polybutadiène, un polyimide thermiquement traité, un polyétherimide thermiquement traité, une polysulfone, une polyéthersulfone, un polyacrylate, un polyméthacrylate, un polyimidazole ou un mélange de ces polymères.

6. Matériau composite perméable selon au moins une des revendications 1 à 5,
**caractérisé en ce que**
ce matériau composite perméable, hydrophobe, comporte une proportion de matière hydrophobe de 0.0001 % en poids à 40,0 % en poids.

7. Matériau composite perméable selon la revendication 6,
**caractérisé en ce que**
ce matériau composite perméable, hydrophobe, comporte une proportion de matière hydrophobe de 0,01 % à 20 % en poids.

8. Matériau composite, perméable, selon au moins une des revendications 1 à 7,
**caractérisé en ce que**
ce matériau hydrophobe se différencie chimiquement et physiquement, ou physiquement ou chimiquement, de la matière utilisée pour la production du matériau composite.

9. Procédé de production d'un matériau composite présentant des propriétés hydrophobes, perméable, à base d'au moins un support perforé et perméable ayant sur au moins un côté du support et à l'intérieur du support un composant inorganique qui comporte pour l'essentiel un composé d'un métal, d'un métalloïde et/ou d'un métal mixte avec au moins un élément du groupe principal 3 à 7, pour lequel sur au moins un support perforé et perméable, on applique au moins une suspension, qui comporte au moins un composant inorganique d'au moins un composé d'au moins un métal, un métalloïde ou un métal mixte, avec au moins un des éléments du groupe principal 3 à 7 et un sol auquel sont ajouté(e)s, en tant qu'au moins une matière hydrophobe ou un agent hydrophobant, des cires et/ou des polymères, qui fondent et/ou deviennent fluides en dessous de 500 °C, et on solidifie cette suspension sur et dans la matière support par un chauffage au moins unique, les cires et/ou les polymères étant fondus au cours de la solidification à une température inférieure à 500 °C.

10. Procédé selon la revendication 9,
**caractérisé en ce que**
on utilise une cire ou un polymère, choisi(e) parmi le polyéthylène, le polypropylène, le polychlorure de vinyle, le polystyrène, le polytétrafluoréthylène, le fluorure de polyvinylidène, le chlorure de polyvinylidène, le polyisoprène, le polybutadiène, un polyimide, un polyétherimide, une polysulfone, une polyéthersulfone, un polyacrylate, un polyméthacrylate, un polyimidazole ou un mélange de ces polymères.

11. Procédé de production d'un matériau composite présentant des propriétés hydrophobes, perméable, à base d'au moins un support perforé, perméable, et ayant sur au moins un côté du support et à l'intérieur du support un composant inorganique qui comporte pour l'essentiel un composé d'un métal, d'un métalloïde et/ou d'un métal mixte avec au moins un élément du groupe principal 3 à 7, pour lequel sur au moins un support perforé et perméable on applique au moins une suspension qui comporte au moins un composant inorganique d'au moins un composé d'au moins un métal, d'un métalloïde ou d'un métal mixte avec au moins un des éléments du groupe principal 3 à 7 et un sol, auquel sont ajoutés, en tant qu'au moins une matière hydrophobe ou une matière hydrophobante, des alkyl-, aryl-, ou fluorosilanes, et on solidifie cette suspension sur et dans le matériau support par un chauffage au moins unique.

12. Procédé selon au moins une des revendications 9 à 11,
**caractérisé en ce qu'**
on utilise un sol qui comporte 0,001 % en poids à 50 % en poids de matière hydrophobe ou hydrophobante.

13. Procédé selon la revendication 12,
**caractérisé en ce qu'**
on utilise un sol qui comporte 0,01 % en poids à 25 % en poids de matière hydrophobe ou hydrophobante.

14. Procédé selon au moins une des revendications 9 à 13,
**caractérisé en ce que**
la matière ou le polymère ou la cire hydrophobe ou hydrophobante est modifié(e) par un traitement chimique et physique ou chimique ou physique.

15. Utilisation d'un matériau composite selon au moins une des revendications 1 à 8, comme membrane pour les distillations à travers des membranes.

16. Utilisation d'un matériau composite selon au moins une des revendications 1 à 8, dans la pervaporation.

17. Utilisation d'un matériau composite selon au moins une des revendications 1 à 8, dans la perméation de vapeur.

18. Utilisation d'un matériau composite selon au moins une des revendications 1 à 8, pour la concentration de matières sensibles à la température.

19. Utilisation d'un matériau composite selon au moins une des revendications 1 à 8, comme membrane dans les réacteurs à membranes.

20. Utilisation d'un matériau composite selon au moins une des revendications 1 à 8, comme membrane dans la filtration sur membrane.

21. Utilisation d'un matériau composite selon au moins une des revendications 1 à 8, pour l'introduction de gaz dans des liquides.
